# NEW EUROPEAN PATENT SPECIFICATION

(11) **EP 0 175 747 B2**
(45) Date of publication and mention of the opposition decision: **15.12.1993**
(45) Mention of the grant of the patent: 29.06.1988
(21) Application number: 85901633.9
(22) Date of filing: 14.03.1985
(51) Int. Cl.: F16F 9/50, B60G 17/08

(54) **SHOCK-ABSORBER**
STOSSDÄMPFERVORRICHTUNG
AMORTISSEUR DE CHOCS

(30) Priority: 04.04.1984 SE 8401874
(43) Date of publication of application: 02.04.1986
(73) Proprietor: ÖHLINS RACING AB, 194 27 Upplands Väsby (SE)
(72) Inventor: ÖHLIN, Kenth, S-191 48 Sollentuna (SE)
(74) Representative: Grünecker, Kinkeldey, Stockmair & Schwanhäusser Anwaltssozietät
(86) International application number: PCT/SE85/00120
(87) International publication number: WO 85/04698

(56) References cited:
- DE-B- 1 505 417
- DE-C- 2 911 768
- FR-A- 1 095 506
- GB-A- 1 450 765
- GB-A- 1 485 003
- GB-A- 2 112 104
- GB-A- 2 120 355
- JP-A-57 173 629
- JP-A-57 173 632
- JP-A-57 182 506
- SE-B- 379 971
- US-A- 3 807 678
- US-A- 3 995 883
- US-A- 4 030 580
- US-A- 4 065 154
- US-A- 4 313 529

## Description

### Technical Field

The present invention relates to a shock absorber including means for controlling the damping rate at any given moment in dependence on external control signals applied to the shock absorber, and comprising a cylinder, a piston arranged within the cylinder and provided with a passageway of variable area for controlling flow of a working fluid from one side of the piston to the other side thereof, and a member incorporated within the piston and controlled by said external control signals to vary the area of said passageway, whereby said external control signals are supplied by a control unit which receives input signals from a sensor associated with the shock absorber, said input signals being related to the instantaneous parameter information obtained from the piston about the relative movement of the piston and the cylinder, the value of said external control signals varying during the strocke of the piston at least in part as a function of said input signals.

### Description of the prior art

Shock-absorbers are encountered in a variety of applications where the requirement exists to absorb forces from a moving mass. By way of example, mention may be made of shock-absorbers for motor vehicles, for example motor cycles and motor cars, where the shock-absorber is fitted between a wheel and the chassis for the purpose of contributing to the optimum jolt-free movement of the chassis, in spite of any irregularities in the surface over which the vehicle is being driven. Another example is provided by the case in which rotating masses which are also subject to centrifugal forces require to be provided with shock-absorption in relation to a solid surface.

Previously disclosed is the fitment of shock-absorbers with constant resistance or shock-absorbing capacity. Also previously disclosed is the execution of the shock-absorber with replaceable or additional component parts to provide the optimum result with regard to the shock-absorbing capacity on each occasion on which the vehicle is driven.

Also previously disclosed, for instance in JP-A-57 173 629, is the possibility to vary the shock-absorbing capacity by means of a controllable member, which in dependence of control signals varies said capacity.

From JP-A-57-182506 a shock absorber system is known in which the dampening characteristics are continuously controlled by control means with a micro-computer into which outside signals, for instance a car speed signal and/or a manual operator signal, and internal signals relating to the movement of the piston in the cylinder of the shock absorber are fed, from which control signals are formed. This known shock absorber system comprises two controllable means for adjusting the dampening characteristics. One of said controllable means is provided in the end wall of a pressurised container connected with one of the fluid chambers in the cylinder of the shock absorber. Said controllable means contains electrically actuable valve means by which the passage area for fluid flow between the pressure container and the chamber in the cylinder of the shock absorber can be varied. The other controllable means is arranged in the piston of the shock absorber.
Said means is designed as an electrically adjustable spring load for a disc valve, by the adjustment of which the passage area characteristics of the fluid passage through the piston from one chamber of the cylinder to the other chamber of the cylinder in one flow direction (rebound direction of piston) may be varied.
Each of the two controllable valve means is effective with respect to a controlled passage area variation in one direction of piston movement, and thus one direction of fluid flow only, the effective directions of the two controllable valve means being opposite to each other. The two controllable means are provided with different control signals. Said known shock absorbing system is very complex in its construction. The adjustment of the dampening characteristics in this known system by way of simultaneous control of two different controllable means within two different modules of the system is prone to malfunction and of a slow reactivity. In this known system the controllable valve means in the pressure container and in the piston of the shock absorber are directly acting valves which therefore require a high amount of electrical energy for actuation thereof.

From JP-A-57-173632 a shock absorber system is known in which one chamber of the cylinder is connected to a separate pressure fluid container (tank). An adjustment of the dampening characteristics is effected by means of an electrically controllable valve arranged in the piston so as to vary the area of the flow passage for the flow from one chamber of the cylinder to the other chamber of the cylinder. This valve control is effective in the "rebound"-direction of movement (stretching) of the piston only. The controllable valve is construed as a directly acting valve so that a large amount of electrical energy is necessary for actuating the valve. The control of the valve is effected by way of a control circuit which processes detection signals indicating vehicle speed, vehicle load, displacement of the buffer (i.e. relative position of vehicle frame and wheel), braking conditions and acceleration, i.e. outside parameters of the status of the vehicle while it is running. In this known system internal signals indicating the instantaneous situation within the buffer (e.g. movement of the piston in the cylinder) are not applied to influence the adjustment of the dampening characteristics of the shock absorber system which is exclusively controlled by the sensing of outside driving data. Thus, an adjustment of the characteristics to suddenly occurring changes in the overall driving conditions indicated by the outside sensors for instance the sudden hitting of a bump in an otherwise smooth road, cannot be effected in this known system.

From DE-C2-29 11 768 a shock absorber is known in which the dampening characteristics are adjustable by electrically actuated valve means installed within the piston stem of a double acting piston within a cylinder of the shock absorber. The valve means is directly actuated, so that a large amount of electrical energy is necessary. The adjustable valve controls the area of a secondary passage in the piston. In one alternative of said known shock absorber the valve can be set only between an "on"-position and an "off"-position by an outside (manually operated) control signal, so that the dampening characteristics are arbitrarily adjusted to be "soft" or "hard". In all other alternatives of the known shock absorber the control of the valve is effected exclusively by an electrical signal sensed internally, either in form of a "end of maximum piston stroke" signal (in which case merely a "on-off" setting of the valve is possible) or in form of an electrical signal indicating the relative motion between piston and cylinder during the relative movement thereof. In all of these alternatives an adjustment of the dampening characteristics in dependence of the driving conditions of the vehicle (e.g. speed, acceleration, braking conditions, motion of the vehicle body relative to the wheels (relative to the road surface)) is not possible.

From DE-B-15 05 417 a continuously adjustable shock absorber is known, in which a piston rod carrying a piston at one end thereof is formed as a hollow tube. In the bore of the piston rod an adjustment element in the form of an essentially cylindrical valve element connected to an actuation rod extending through the bore of the piston rod and connected to an actuation mechanism is arranged moveably either in axial or rotational direction. The piston of the shock absorber which is slidably arranged in a cylinder in the usual manner divides the interior of the cylinder of the shock absorber into two chambers. In the piston two axial main channels are arranged such as to connect the two chambers in the cylinder. On each side of the piston one spring plate each is provided which covers the outflux opening of one of the main channels each. One of the main channels is acting as a passage for fluid flow through the piston from one chamber to the other chamber in one direction of the piston motion (e.g. downward motion of the piston), whereas the other main channel is acting as a passage for the fluid flow through the piston in the opposite direction of motion of the piston (e.g. upward motion). The extent to which the outflux opening of the respective main channel is covered by the respective spring plate depends on the actual position of the respective spring plate under the pressure of the fluid flow through the respective main channel. The spring plate will be flexed to a degree depending on the fluid pressure and thus will open the outflux opening of the respective main channel to an according extent. On the outer side of each of the spring plates, one co-axial cup-shaped support piston each is provided. Each of the support pistons is urged towards the outer side of the respective spring plate by spring means. Between each of the support pistons and the correlated spring plate one pressure chamber each is delimited. Each of the main channels is connected with one of said pressure chambers each by one passage each formed by respectively arranged passages in the piston, in the valve element in the bore of the piston rod and in the wall of the piston rod. The respective portions of said passages in the valve element may be formed such that by axial or rotational displacement of the valve element the cross-section of the respective passages connecting the respective main channels with the respective pressure chambers may be varied. In case of a downward motion of the piston relative to the cylinder fluid will not only flow through the respective main passage, but from said main passage will also flow through the related passage into the related pressure chamber between the related support piston and the related spring plate (in that case those on the upper side of the piston) and will increase the pressure there. Consequently, the force urging the respective support piston on the respective spring plate will be diminished due to the counteraction of the pressure force in the pressure chamber so that the support load acting on the spring plate will become smaller and the flexibility of the spring plate will become larger. The amount of pressure increase in the pressure chamber will, of course, depend on the cross-section of the passage from the respective main channel to the respective pressure chamber and therefore on the positioning of the valve element. If the passage is closed completely, then the spring force acting on the respective support piston and thus on the respective spring plate is in this case effective in its full amount. If on the other hand due to a respective positioning of the valve element the passage between the respective main channel and the respective pressure chamber is fully open, then a large counterpressure force can develop in the respective pressure chamber and the effect of the spring force acting on the respective support piston will be largely diminished. It is therefore possible by adjustment of the valve element to adjust the flexibility of the respective spring plate and therefore the "softness" of the dampening characterisics of the shock absorber in the respective direction of motion of the piston. An analogous adjustment is possible with respect to the flexibility of the spring plate cooperating with the main passage provided for the opposite direction of motion of the piston (e.g. the downward motion). In this known shock absorber two completely separate systems of spring plates, support pistons, pressure chambers and passages connecting the respective main channel with the respective pressure chamber are provided for the adjustment of the flexibility of the respective spring plate in each of the two opposite directions of motion of the piston. The known shock absorber is therefore construed in a very complex manner. For each direction of action (motion) of the piston separate valve means, separate passage systems and separate means for adjusting the valve means are necessary. Due to its complexity, this known shock absorber system is prone to malfunction. The valve element in the piston rod must be actuated via a rod connecting the valve element with an actuator at the end of the rod outside of the cylinder of the shock absorber system. This not only leads to a very complicated construction but due to the large masses of the valve element and the rod to a low reactivity of the known shock absorber system. The outside actuation of the valve element is not suited for adjusting the dampening characteristics of the shock absorber to instantaneously occurring impacts on the shock absorber, i.e. to suddenly occurring changes in the driving conditions.

Also previously disclosed, for instance in GB-A-2 120 355 and GB-A-2 112 104, is the provision of a variation in the shock-absorbing capacity with the assistance of an external control unit providing the control signals.

### Description of the present invention technical problem

There is a wish that the aforementioned control unit can be supplied in connection to shock absorbers with information relating to the behaviour of the vehicle, which in turn is controlled by the actions of the driver. Thus, for example, the control unit may be supplied with information in respect of the speed of the vehicle, the torque being transmitted by the engine, and any changes in speed and inclination, etc. With the help of this information, the control unit is to be able to calculate the optimum shock-absorbing function for the shock-absorber at any given time and to control the shock-absorber in such a way that it will provide the shock-absorption determined by calculation.

In order to solve these problems there is a need for an operation and a signal exchange between the control unit and the shock-absorber which is not revealed by the known shock-absorbers-arrangement.

For example, said GB references proposes a structure which relates to only simple adjustments of damping characteristics. The JP reference does not discuss the necessary high information exchange between the unit and shock-absorber. The object of this known reference is quite another, as well.

In systems with an external control unit it may be desirable to be able to achieve a technically simple construction for the shock-absorber in which the variation function of the shock-absorber is integrated with the construction of the shock-absorber as a whole. In the case of motor cycles, for instance, it is desirable to be able to avoid external components which must form part of or must be connected to the shock-absorber. Thus, the aim is to achieve a construction for the shock-absorber which requires no external additions or other design changes because of the requirement for it to be provided with the aforementioned variation facility for its shock-absorbing capacity.

### Solution

The object of the present invention is solved by the features defined in claim 1. A further developments is also based on the manner in which a used check valve arrangement is structured. Accordingly, each direction of the fluid flow through the piston is provided with its own pair of check valves. Furthermore, in each of the directions of the fluid flow, the fluid is capable of being conducted via two parallel channels. The valve actuated by the controllable member determines the flow of fluid in the first channel for the purpose of determining the position of a membrane included in the servo valve function. The membrane is in turn connected to the valve which determines the main flow of fluid in the other channel.

The controllable member is controlled from the external control unit via electrical connections which in this case may incorporate one or more electrical conductors which extend between said piston and the outside of the shock-absorber.

The information exchange between the control unit and the chock-absorber is very high in order attain the variations during the individual strokes.

The control unit consists in the present case preferably of a computer unit which is able to effect an information exchange with said sensors of for example 100 000 pieces of information per second. In the event of the shock-absorber being fined to a motor vehicle, the computer unit is supplied with information relating to the gas supply, the vehicle gearbox and/or the vehicle brakes, etc.

### Advantages

By means of what is proposed above the shock-absorber can be able to retain its neat construction with its comparatively small external volume, in spite of the introduction of the aforementioned facility to vary the shock-absorbing capacity. Furthermore, it is possible to achieve a reliable variation function in return for comparatively little power consumption, which is of great importance above all for motor vehicles.

### Description of the drawings

A preferred embodiment of a means exhibiting the significant characteristic features of the invention is described below with simultaneous reference to the accompanying drawings, in which:
Figure 1 shows in side view a shock-absorber which operates with fluid/gas;
Figure 1a shows a sectional view on an enlarged scale in relation to Figure 1 the construction of a piston in the shock-absorber in accordance with Figure 1 and a first fluid flow from the first side of the piston to its second side;
Figure 1b shows the construction of the piston in accordance with Figure 1, but with a second fluid flow from the second side to the first side of the piston; and
Figure 2 shows in the form of a basic diagram the construction of the electronic component for the shock-absorber in accordance with Figure 1.

### Best mode carying out the invention

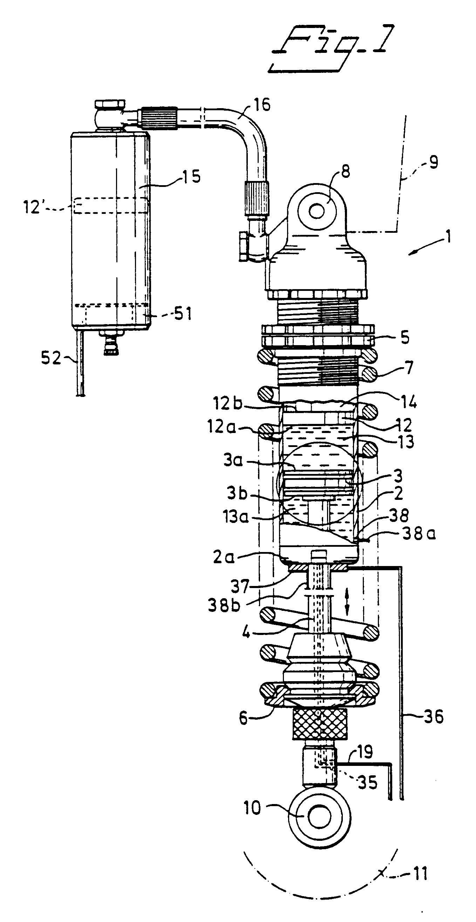

In Figure 1 a shock-absorber is indicated by the reference designation 1. The basic construction of the shock-absorber may be of a previously disclosed nature. An example of such a shock-absorber is the Öhlins 'Gas Shocks' shock-absorber sold on the open market. A shock-absorber of this kind may incorporate a cylinder 2 and arranged inside it a piston 3 with its associated piston rod 4. Both the cylinder 2 and the piston rod 4 are provided with seatings 5 and 6 for a coil spring 7. The cylinder is provided with attachment organs 8 for securing it to a chassis, indicated here symbolically by the reference designation 9. The piston rod is provided at its free end with a corresponding attachment 10 for securing it to an organ, for example a wheel, indicated here symbolically by the reference designation 11. The seating 6 follows the movement of the piston rod.

In addition to the fixed piston 3 the shock-absorber illustrated in Figure 1 is provided with a moving piston 12, which has one of its sides 12a facing towards a fluid 13 present inside the cylinder and its other side 12b facing towards a gas 14 present inside the cylinder. The gas side of the operating cylinder is connected to an accumulator 15 via a connection 16.

Since the basic function of the shock-absorber is in itself already very familiar, it is not proposed to describe it in any greater detail here. All that need be established is that the fixed piston 3 in accordance with Figure 1 is provided with transcurrent passageways which make it possible for a fluid on one side 3a of the piston to pass through the piston to its other side 3b, and vice versa. The shock-absorption effect provided by the shock-absorber occurs, amongst other things, because of the presence of the aforementioned fluid passageway which acts as a constriction between the sides 3a and 3b of the piston.

In accordance with the idea of invention, the aforementioned fluid passageway must be variable. For this purpose a controllable member is so arranged as to vary depending on control impulses received from an external control unit not shown in Figure 1 the cross-sectional area of the passageway between said sides 3a and 3b of the piston. The control organ in the typical embodiment shown here is of the kind which is capable of being controlled by means of electrical signals from said control unit. The controllable organ also operates with a servo function so that small control signals are able to cause and actuate the variation in the passageway. In the typical embodiment the controllable member includes a control valve 17. preferably in the form of a conventional solenoid valve. The winding 18 in said solenoid valve is connected to said control unit via wires 19, being two in number in the typical embodiment shown.

Each direction of flow from one side to the other of the piston 3 is provided with its own pair of check valves. Thus the direction of flow from side 3a to side 3b is provided with the check valves 20 and 21. The other direction of flow is provided with the pair of check valves 22, 23. Two parallel flow channels 24, 25 and 26, 27 are arranged in connection with said pairs of check valves. In addition the piston is provided with an internal space 28, inside which is arranged a membrane 29. To the membrane there is preferably securely attached a valve 30. Said valve is arranged in the flow channel 24, 25 which forms part of the main passageway between the sides 3a and 3b of the piston. A needle 31 in the solenoid valve is arranged in the flow channel 26, 27 which forms a control passageway for the servo function of the controllable member.

If, for example, the fluid pressure on side 3a exceeds the fluid pressure on side 3b of the piston, fluid will flow from the check valve 20 via said passageways 24, 25 and 26, 27 as far as and then out through the check valve 21 depending upon the manner in which the needle 31 is regulated. A fluid flow corresponding to the setting of the needle will be formed in the channel 26, 27.

A force corresponding to the flow will act upon the membrane 29, which in turn will regulate the valve 30 in the channel 24, 25. If the needle 31 is actuated by the winding 18 so as to close the passageway 26, 27 fully, no control flow will occur and the valve 30 will keep the channel 24, 25 completely closed. A small effect upon the needle will give rise to a small control flow, which in turn will produce a correspondingly small effect on the membrane in a downward sense as shown in the Figure, allowing this to open the valve 30 in the channel 24, 25. A maximum effect on the needle 31 will produce a maximum control flow and a correspondingly maximum effect on the membrane and the valve 30, which will permit a maximum flow in the main channel 24, 25, and so on.

In the case of positive pressure being exerted on the side 3b of the piston in relation to the side 3a, the pair of check valves 22, 23 will enter into effect instead. Their function will be equivalent to that described above, but with the difference that the direction of flow in the main channel 24, 25 will be the opposite. The direction of flow from side 3a to side 3b is indicated by the arrows 32 and 32' in Figure 1a, whereas the opposite direction of flow is indicated by the arrows 33, 33' in Figure 1b. The direction of flow in the control channel is indicated by the arrows 34, 34' for both the flows referred to above in accordance with Figures 1a and 1b.

The aforementioned membrane 29 is flexibly supported inside the space 28 by means of moving attachments 29a. These attachments may consist of suspension spring mountings of a previously disclosed kind, for example of a plastics material which is sufficiently strong to withstand the fluid in question, which may take the form of hydraulic oil. The sprung mounting of the membrane 29 is in this case so executed that sealing is provided between the lower and upper surfaces of the membrane in such a way that the negative pressure produced by the control pressure is able to act upon the membrane in accordance with what has been stated above. The aforementioned pairs of check valves 20, 21 and 22, 23 may take the form of check valves of a previously disclosed kind. The passageways or channels referred to above can be provided by bores in the piston material, said bores being executed in a previously disclosed fashion.

The wire or wires 19 in the case illustrated is/are routed inside a central channel 4a in the piston rod 4. It is in actual fact also possible to install the conductor or conductors on the outside of the piston rod 4. In Figure 1 the outlet for the conductors 19 is represented by a side channel 35. The manner in which the conductors are suspended shall be executed in such a way as to provide sufficient free play to permit the maximum relative movement to take place between the piston rod and the cylinder. This suspension of the conductors may be executed in a previously disclosed fashion without wear being caused to the conductors concerned.

In accordance with the above, the shock-absorber shall be capable of transmitting a signal back to the aforementioned external control unit. This signal shall preferably inform the external control unit of the position in which the shock-absorber is situated, that is to say the relative positions of the piston and the operating cylinder. This information is utilized by the external control unit in order to determine the speed of the movements between the chassis 9 and the unit 11, and the length of the suspension travel remaining until the respective end positions are reached, etc. The return signal may suitably be transmitted via additional conductors 36 which may be one, two or more number. In the typical embodiment shown an sensor 37 is arranged for this purpose on the end surface 2a of the cylinder 21. Said sensor 37 may be of a previously disclosed kind which provides information in respect of the speed of the relative movements of the piston and the cylinder. The cylinder may also be fitted with end position sensors 38 connected via conductors 38a to the external control unit. Only one end position sensor is shown in the Figure in the interests of clarity.

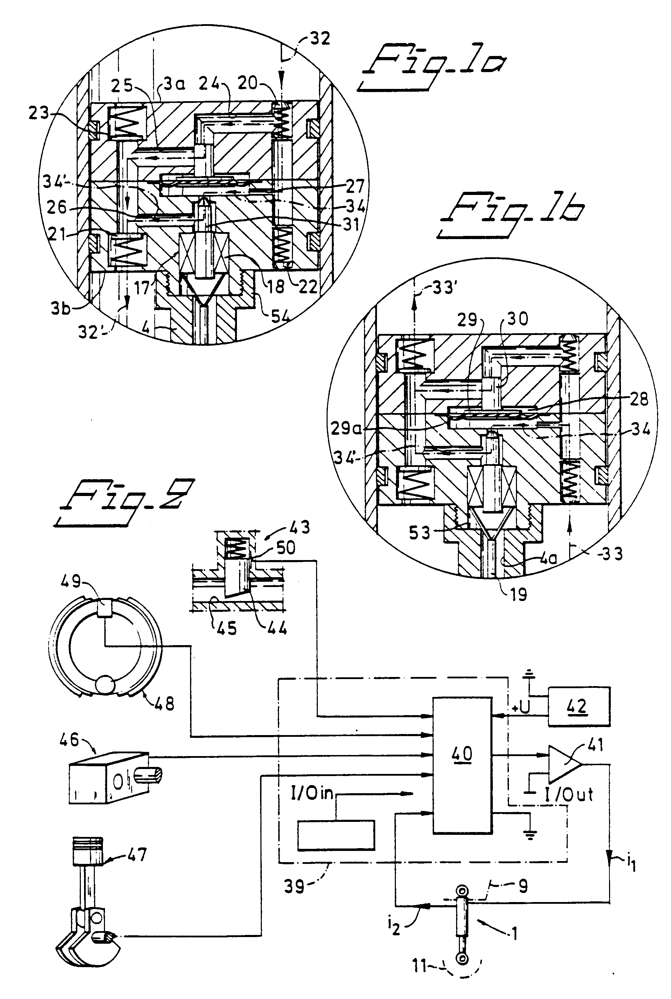

The external unit referred to above may take the form of a microcomputer of a previously disclosed kind. The microcomputer is shown in Figure 2 and may be installed in a suitable location on the vehicle. An example of the type of computer which may be used is the microcomputer sold on the open market by Motorola under the reference 6805. The microcomputer is identified in Figure 2 by the reference designation 39 and comprises in a previously disclosed fashion a CPU 40 with its associated memories, for example ROM and RAM memories arranged in the same chip. The program which controls the shock-absorber is entered into the ROM memory. This memory can also contain stored constants holding the information required by the program for the control functions in question. Furthermore, the RAM memory may be used for the random storage of calculation variables. The electronic equipment also includes a current amplifier 41 of a previously disclosed kind. This amplifier is of the STD type and performs the task of providing the controllable organ 17, 18 referred to above with control signals. The current amplifier may be regarded as an adapter circuit for matching the power requirement of the shock-absorber to the power output of the microcomputer. The power supply to the microcomputer is provided from the electrical generator 42 of the vehicle. The microcomputer is connected to one or more sensors which are able to provide information in respect of the behaviour of the vehicle, as determined by the driver. One example of an sensor which provides information is a gas supply system 43 which, by means of a valve 44, controls the supply of fuel in a fuel line 45. Another example is provided by those components of the vehicle which give information about its speed; this may be the gearbox 46 of the vehicle, in which case information can be obtained both from the position of the gear lever 47 and from rotating units inside the gearbox. A third information-providing element which may be of interest in this context is one or more of the brakes 48 of the vehicle. Each of the components 43, 46 and 48 is fitted with one or more sensors 49, 50 to provide the information in question. In the Figure the control signal from the microcomputer 40 to the shock-absorber is indicated by i₁, whilst the return signal from the shock-absorber to the microcomputer is indicated by i₂.

With the help of the aforementioned sensor, information is supplied to the microcomputer; on the basis of this information the computer is then able to work out, for example, the speed of the vehicle, the torque being transmitted by the engine, and any change in speed (acceleration or retardation), that is to say the behaviour of the vehicle occasioned by the influence of the driver upon it. With the help of the aforementioned quantities or parameters the microcomputer is able by controlling the controllable organ to adjust the resistance or the shock-absorbing capacity of the shock-absorber so as to achieve the optimum function at any given moment. The speed at which information is transmitted between the microcomputer and the shock-absorber can be high, and may, for example, reach 100 000 pieces of information per second. The execution and number of the sensors used in various applications may vary within wide limits. The objective, however, is to provide the microcomputer at all times with sufficient information in respect of the actions or intentions of the driver as to be able to utilize the available performance of the vehicle.

Thanks to the means described above it is possible to link the resistance of the shock-absorber to this performance. The resistance of the shock-absorber need no longer be a compromise between a number of different factors specified at the time of manufacturing the shock-absorber, but may now be optimized on a continuous basis. This means that considerable improvements can be achieved in road-holding in many different respects, for example one or more, or all of the following functions: better braking ability, better acceleration and/or better cornering ability, etc.

The aforementioned sensor may incorporate code discs 38b on the outside of the piston rod 4. The positions of said code discs can be scanned by means of said sensor 37, for example with the help of photo-transistors.

As an alternative to, or in addition to the sensors 37, 38, the sensing of the position and/or the speed of the pistion in relation to the cylinder 2 can be performed by monitoring the pressure by means of a pressure-monitoring sensor 51 connected to the external control unit via conductors 52, for example two in number. The sensor 51 can be of a previously disclosed kind. The variations in pressure due to the relative movements between the piston and the cylinder 2 are monitored at very closely-spaced intervals (see above) by the microcomputer, which is able in this way to calculate the speeds/positions of the piston relative to the cylinder.

The piston 12 is positioned inside the cylinder 2 if the accumulator 15 is not present. If the accumulator 15 is present, then this will instead constitute the moving piston 12', in which case the piston 12 in the cylinder may be omitted. The pressure sensor 51 is positioned inside the cylinder 2 if the accumulator is not present.

The solenoid valve 17 is positioned in a recess 53 (Figure 1b) which is covered by a combined covering and retaining element 54 (Figure 1a). The piston also exhibits a parting plane, and the parts of the piston are held together in a previously disclosed, but not illustrated, fashion, for example by means of bolts.

The control member has a protected position inside the piston. It is not exposed for the main fluid between the upper and under sides of the piston. The control member is able to control the control passage essentially independent of the pressure difference between the upper and under surfaces of the piston, at least in the normal operating conditions.

The invention is not restricted to the embodiment shown above by way of example, but may undergo modifications within the context of the following Patent Claims.

## Claims

1. A shock absorber (1) including means for controlling the damping rate at any given moment in dependence on external control signals (i₁) applied to the shock absorber, and comprising a cylinder (2), a piston (3) arranged within the cylinder and provided with a passageway of variable area for controlling flow of a working fluid from one side of the piston to the other side thereof, and a member (17) incorporated within the piston and controlled by said external control signals to vary the area of said passageway, said external control signals (i₁) being supplied by a control unit (40) which receives input signals (i₂) from a sensor (37,38,51) associated with the shock absorber (1), said input signals being related to the instantaneous parameter information obtained from the piston about the relative movement of the piston (3) and the cylinder (2), the value of said external control signals (i₁) varying during the stroke of the piston at least in part as a function of said input signals (i₂). characterised in that said controllable member (17) within the piston (3) is the only member provided for controlling the damping rate in dependence on said external control signals (i₁) and acts in both directions of movement of the piston in the cylinder, that in each of the directions of flow (32, 32' and 33, 33') through the piston as occurring in both directions of movement of the piston (3), fluid is capable of being conducted in the directions of flow as occurring in both directions of movement of the piston (3) via a second channel (24, 25) and via a first channel (26, 27) in two separate streams, that the controllable member (17) forms part of an electrically actuated servo valve (31) for determining the flow of the fluid in the first channel (26,27) for determining the position of an organ, that a valve member (30) connected to the organ forms part of another valve for determining the flow of the fluid in the second channel (24,25), and that both the servo valve (31) and the valve including the valve member (30) are located within the piston.

2. Shock absorber as claimed in patent claim 1, characterised in that for each of the directions of flow through the piston a pair (20, 21 and 22, 23) of check valves is provided.

3. Shock absorber as claimed in patent claims 1 or 2, characterised in that said organ is a membrane (29),

4. Shock absorber as claimed in any preceding patent claim, characterised in that the controllable member (17) is connected to the control unit (40) via an electrical connection.

5. Shock absorber as claimed in patent claim 4, characterised in that the electrical connection incorporates one or more electrical conductors (19) which extend between said piston and the outside (35) of the shock absorber.

6. Shock absorber as claimed in any preceding patent claim, characterised in that the shock absorber is fitted to a motor vehicle, for example a motor cycle or a motor car, and in that the control unit (40) receives information from components capable of influencing the behaviour of the vehicle, for example the accelerator (43), the vehicle gearbox (46) and/or the vehicle brake(s) (48) etc.

7. Shock absorber as claimed in patent claims 1-4, characterised in that said sensor comprises a pressure sensor (51) and is so arranged as to sense any changes in the pressure in the fluid or fluid/gas produced by relative movements between the piston and the cylinder.

8. Shock absorber as claimed in patent claims 1-7, characterised in that the control unit (40) monitors said sensors (37, 38, 51) at closely-spaced intervals, for instance 100,000 times per second.

## Patentansprüche

1. Stoßdämpfervorrichtung (1), die Einrichtungen zur Steuerung der Dämpfungsrate zu jedem gegebenen Zeitpunkt in Abhängigkeit von auf den Stoßdämpfer angewandten externen Steuersignalen (i₁) einschließt, und einen Zylinder (2), einen in dem Zylinder angeordneten und mit einem Durchlaß veränderlicher Fläche zur Steuerung des Durchflusses eines Arbeitsfluids von einer Seite des Kolbens zu der anderen Seite desselben versehenen Kolben (3), und ein innerhalb des Kolbens angeordnetes Organ (17), das zur Veränderung des Durchlasses mittels der externen Steuersignale gesteuert wird, aufweist, wobei die externen Steuersignale (i₁) von einer Steuereinheit (40) geliefert werden, welche auf eine vom Kolben empfangene augenblickliche Parameter-Information über die Relativbewegung des Kolbens (3) und des Zylinders (2) bezogene Eingabesignale (i₂) von einem mit der Stoßdämpfervorrichtung (1) gekoppelten Sensor (37, 38, 51) erhält, und wobei der Wert der externen Steuersignale (i₁) während der Kolbenbewegung wenigstens teilweise als Funktion der Eingabesignale (i₂) variiert, **dadurch gekennzeichnet,** daß das steuerbare Organ (17) in dem Kolben (3) das einzige zur Steuerung der Dämpfungsrate in Abhängigkeit von den externen Steuersignalen (i₁) vorgesehene Organ ist und in beiden Richtungen der Bewegung des Kolbens in dem Zylinder wirkt, daß in jeder der Fließrichtungen (32, 32' und 33, 33') durch den Kolben, wie sie in beiden Richtungen der Bewegung des Kolbens (3) auftreten, Fluid in denjenigen Fließrichtungen, wie sie in den beiden Richtungen der Bewegung des Kolbens (3) auftreten, durch einen zweiten Kanal (24, 25) und durch einen ersten Kanal (26, 27) in zwei separaten Strömen leitbar ist, daß das steuerbare Organ (17) Teil eines elektrisch betätigten Servoventils (31) zur Bestimmung des Durchflusses des Fluids in dem ersten Kanal (26, 27) zur Bestimmung der Stellung eines Stellgliedes ist, daß ein mit dem Stellglied gekoppeltes Ventilglied (30) einen Bestandteil eines anderen Ventils zur Bestimmung des Durchflusses des Fluids in dem zweiten Kanal (24, 25) bildet, und daß sowohl das Servoventil (31) als auch das das Ventilglied (30) enthaltende Ventil in dem Kolben angeordnet sind.

2. Stoßdämpfervorrichtung nach Anspruch 1, **dadurch gekenn****zeichnet,** daß für jede der Fließrichtungen durch den Kolben ein Paar (20, 21 und 22, 23) von Rückschlagventilen vorgesehen ist.

3. Stoßdämpfervorrichtung nach Anspruch 1 oder 2, **dadurch** **gekennzeichnet,** daß das Stellglied eine Membran (29) ist.

4. Stoßdämpfervorrichtung nach einem der vorhergehenden Ansprüche 1 bis 3, **dadurch gekennzeichnet,** daß das steuerbare Organ (17) mit der Steuereinheit (40) über eine elektrische Verbindung gekoppelt ist.

5. Stoßdämpfervorrichtung nach Anspruch 4, **dadurch gekenn****zeichnet,** daß die elektrische Verbindung einen oder mehrere elektrische Leiter (19) aufweist, die sich zwischen dem Kolben und der Außenseite (35) des Stoßdämpfers erstrecken.

6. Stoßdämpfervorrichtung nach einem der vorhergehenden Ansprüche, **dadurch gekennzeichnet,** daß der Stoßdämpfer an einem Kraftfahrzeug, beispielsweise einem Motorrad oder einem Kraftwagen, angebracht ist, und daß die Steuereinheit (40) Informationen von Komponenten erhält, die geeignet sind, das Verhalten des Fahrzeugs zu beeinflussen, beispielsweise vom Gashebel (43), vom Fahrzeug-Getriebe (46) und/oder von der/den Fahrzeugbremse(n) (48) usw.

7. Stoßdämpfervorrichtung nach einem der Ansprüche 1 bis 4, **dadurch gekennzeichnet,** daß der Sensor einen Druckfühler (51) aufweist und so angeordnet ist, daß er durch Relativbewegungen zwischen dem Kolben und dem Zylinder hervorgerufene Änderungen des Fluid- oder Fluid/Gas-Druckes erfaßt.

8. Stoßdämpfervorrichtung nach den Ansprüchen 1 bis 7, **da****durch gekennzeichnet,** daß die Steuereinheit (40) mit den Sensoren (37, 38, 51) in dicht aufeinanderfolgenden Intervallen, beispielsweise 100 000 mal pro Sekunde, in Verbindung tritt.

## Revendications

1. Amortisseur (1) de chocs comprenant un dispositif destiné à régler à tout instant donné la constante de vitesse d'amortissement en fonction de signaux externes (i₁) de commande appliqués à l'amortisseur de chocs, et comprenant un cylindre (2), un piston (3) disposé dans le cylindre et ayant un passage d'aire de section variable destiné à régler la circulation d'un fluide de travail d'un côté du piston à l'autre côté du piston, et un organe (17) incorporé au sein du piston et commandé par lesdits signaux externes de commande afin qu'ils fassent varier l'aire de section dudit passage, lesdits signaux externes (i₁) de commande étant fournis par une unité (40) de commande qui reçoit des signaux (i₂) d'entrée provenant d'un capteur (37, 38, 51) associé à l'amortisseur (1) de chocs, lesdits signaux d'entrée étant en relation avec des renseignements instantanés concernant des paramètres, renseignements provenant du piston et concernant le mouvement relatif du piston (3) et du cylindre (2), la valeur desdits signaux externes (i₁) de commande variant au cours de la course du piston, au moins en partie en fonction desdits signaux (i₂) d'entrée,
amortisseur caractérisé en ce que ledit organe (17) commandable au sein du piston (3) est le seul organe prévu pour commander la constante de vitesse d'amortissement en fonction desdits signaux externes (i₁) de commande et en ce que cet organe agit dans les deux directions de mouvement du piston dans le cylindre, en ce que, dans chacune des directions d'écoulement (32, 32' et 33, 33') dans le piston, écoulement qui se produit dans les deux directions de mouvement du piston (3), le fluide est capable d'être conduit dans les directions d'écoulement, telles qu'elles se produisent dans les deux directions du mouvement du piston (3), en empruntant un second canal (24, 25) et en empruntant un premier canal (26, 27) en deux courants séparés ; en ce que l'organe (17) commandable fait partie d'une servovanne (31) à commande électrique pour déterminer l'écoulement du fluide dans le premier canal (26, 27) afin de déterminer la position d'un membre de réglage, en ce qu'un membre (30) de vanne, relié au membre de réglage fait partie d'une autre vanne pour déterminer l'écoulement du fluide dans le second canal (24, 25) et en ce que la servovanne (31) et la vanne comprenant le membre (30) de vanne sont situés au sein du piston.

2. Amortisseur de chocs tel que revendiqué à la revendication 1, caractérisé en ce qu'une paire (20, 21, 22, 23) de soupapes de retenue est associée à chaque sens de circulation d'écoulement à travers le piston.

3. Amortisseur de chocs tel que revendiqué à la revendication 1 ou 2, caractérisé en ce que ledit membre de réglage est une membrane (29).

4. Amortisseur de chocs tel que revendiqué dans l'une quelconque des revendications précédentes, caractérisé en ce que l'organe (17) commandable est relié à l'unité (40) de commande par l'intermédiaire d'une connexion électrique.

5. Amortisseur de chocs, tel que revendiqué dans la revendication 4, caractérisé en ce que la connexion électrique incorpore un ou plusieurs conducteurs (19) électriques qui s'étendent entre ledit piston et l'extérieur (35) de l'amortisseur de chocs.

6. Amortisseur de chocs tel que revendiqué dans l'une quelconque des revendications précédentes, caractérisé en ce que l'amortisseur de chocs est monté sur un véhicule à moteur, par exemple un motocycle ou moto, ou un véhicule automobile à moteur, et en ce que l'unité de commande (40) reçoit des informations provenant d'organe ou d'éléments capables d'influencer le comportement du véhicule, par exemple l'accélérateur (43), la boîte de vitesses (46) du véhicule, et/ou les freins (48) du véhicule, etc.

7. Amortisseur de chocs tel que revendiqué dans les revendications 1 à 4, caractérisé en ce que ledit capteur comprend un capteur (51) de pression et est disposé de façon à déceler toutes les variations éventuelles de la pression du fluide ou d'un fluide-gaz, produites par des mouvements relatifs de déplacement du piston par rapport au cylindre.

8. Amortisseur de chocs tel que revendiqué dans les revendications 1 à 7, caractérisé en ce que l'unité (40) de commande surveille lesdits capteurs (37, 38, 51) à des intervalles rapprochés, par exemple 100 000 fois par seconde.
